# FASCICULE DE BREVET EUROPEEN

(11) **EP 1 107 087 B1**
(45) Date de publication et mention de la délivrance du brevet: **19.01.2005**
(21) Numéro de dépôt: 00403313.0
(22) Date de dépôt: 27.11.2000
(51) Int. Cl.: G05G 5/06

(54) **Dispositif de commande à plusieurs positions stables, notamment pour allume-cigares**
Steuervorrichtung mit mehreren stabilen Positionen, insbesondere fur Zigarrenanzünder
Controlling apparatus having multiple stable positions, especially for cigar lighter

(30) Priorité: 30.11.1999 FR 9915070
(43) Date de publication de la demande: 13.06.2001
(73) Titulaire: VALEO VISION, 93012 Bobigny Cédex (FR)
(72) Inventeur: Rostan, Philippe, 93012 Bobigny Cédex (FR)

(56) Documents cités:
- DE-A- 3 642 833
- US-A- 5 223 695
- US-A- 5 928 539

## Description

L'invention concerne le domaine des dispositifs de commande à plusieurs positions stables, notamment pour véhicules automobiles. Plus précisément, il s'agit de dispositifs destinés à être utilisés comme interrupteurs, commutateurs, boutons poussoirs, etc.

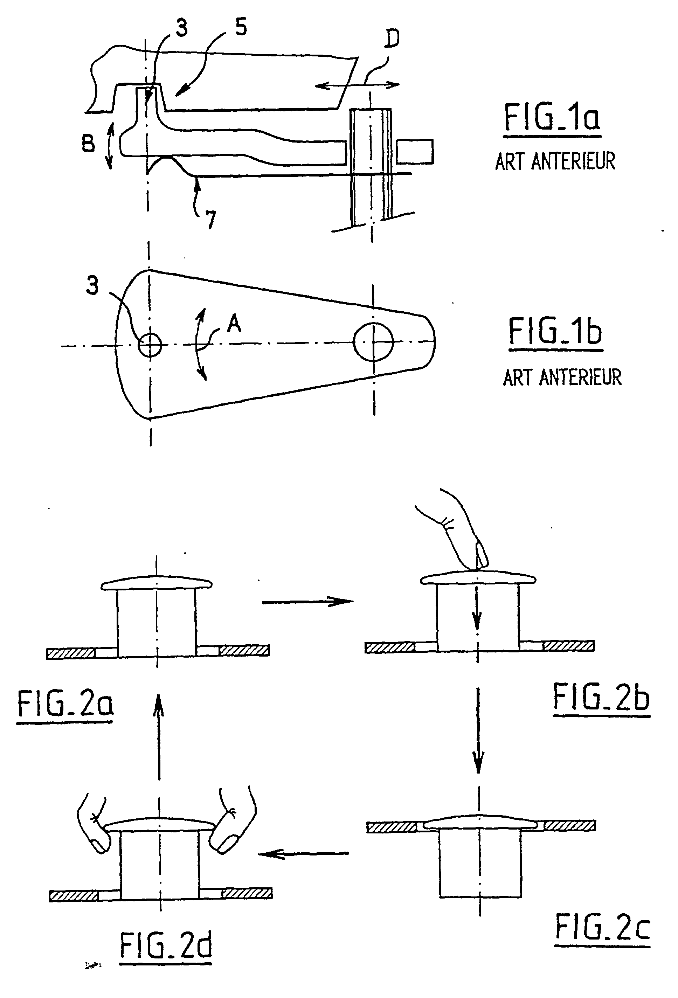

On connaît déjà des interrupteurs mécaniques bistables commandes de climatiseurs, de warning, etc.) tels que définis dans le préambule de la première revendication indépendante et comprenant un doigt 3 et une came 5 en forme de coeur. Leur principe est schématiquement illustré sur les figures 1a et 1b. Lorsque ces interrupteurs sont actionnés, le doigt 3 et la came 5 sont déplacés en translation, l'un par rapport à l'autre (mouvement D, figure 1a). Au cours de cette translation, le doigt 3 est guidé autour de la came 5, sur un chemin de came selon un sens unique, avec un mouvement auxiliaire (mouvement A, figure 1b) à plat, dans un plan parallèle à la direction de fonctionnement du bouton de l'interrupteur. Pour suivre le chemin de came, le doigt 3 subit une rotation autour d'un axe perpendiculaire à celui de translation (mouvement D). Le doigt 3 de ce type de dispositif est, en outre, appliqué en permanence, grâce à un ressort 7, au fond du chemin de came qui présente une altitude variable et implique un déplacement du doigt 3 perpendiculairement à la direction de fonctionnement du bouton de l'interrupteur (mouvement B, figure 1a).

Un but de l'invention est de fournir un dispositif de commande à plusieurs positions stables, moins encombrants que ceux décrits ci-dessus.

Ce but est atteint grâce à un dispositif de commande à plusieurs positions stables, tel que défini dans la première revendication indépendante, comprenant une came et un doigt, le doigt parcourant un chemin de came autour de la came, lorsque le doigt et la came sont mus, l'un par rapport à l'autre, en translation, le chemin de came présentant une courbure autour d'un axe de rotation parallèle à l'axe de la translation pour mouvoir, lors de la translation, le doigt et la came en rotation l'un par rapport à l'autre, caractérisé en ce que le mouvement de rotation de la came et du doigt, l'un par rapport à l'autre est réalisé grâce au fait que le doigt et la came sont respectivement chacun constitués d'une bague cylindrique ; ces deux bagues étant coaxiales et aptes à un mouvement de rotation l'une par rapport à l'autre. En effet, les dispositifs tels que des boutons ayant souvent eux-mêmes une forme cylindrique de révolution, les deux bagues peuvent aisément être incorporées dans le dispositif. En outre, les deux bagues étant coaxiales, l'une située dans l'autre, le dispositif selon l'invention est d'une remarquable compacité.

Selon l'invention, le doigt est guidé sur le chemin de came grâce à un téton monté sur une languette élastique et venue de matière avec la bague sur lequel il est situé. Ceci permet, en n'utilisant pas de lame ou de ressort pour appliquer le doigt au fond du chemin de came (comme dans l'art antérieur présenté ci-dessus), de limiter le nombre de pièces du dispositif. Ceci en facilite l'assemblage et le rend peu coûteux à fabriquer.

Avantageusement, le dispositif de commande selon l'invention comprend au moins une butée pour encaisser les efforts importants exercés sur le dispositif, selon l'axe de translation. Grâce à cette butée, l'utilisateur peut exercer un effort très important parallèlement à l'axe de translation du dispositif sans endommager la came, ni le doigt. Le nombre de butées peut être supérieur à 1.

Avantageusement aussi, le dispositif selon l'invention comporte un ressort assurant un effort permanent pour ramener le doigt en butée sur la came coeur, dans les positions stables.

Selon un autre aspect, l'invention est un allume-cigares suivant la revendication indépendante 4.

On connaissait déjà des allume-cigares suivant le préambule de ladite revendication 4 et comportant des boutons poussoirs, sur lesquels on peut appuyer ou que l'on peut tirer. Le fonctionnement d'un bouton d'allume-cigares de l'art antérieur, de ce type, est illustré sur les figures 2a et 2d. Il dépasse de la planche de bord sur laquelle l'allume-cigares est monté, lorsque ce dernier n'est pas utilisé (figure 2a). Cette position correspond à une position de repos. Une pression est exercée sur le bouton-poussoir pour mettre l'allume-cigares en chauffe (figure 2b). Le bouton reste enfoncé pendant la période de chauffe dans un bloc d'alimentation (figure 2c). En fin de période de chauffe le bouton remonte et redevient saillant sur la planche de bord afin que l'utilisateur puisse utiliser l'ensemble chauffant solidaire du bouton (figure 2d). Cette position du bouton est identique à celle de repos décrite plus haut (figure 2a). Dans cette position l'utilisateur peut également tirer sur le bouton pour extraire l'ensemble chauffant du bloc d'alimentation de l'allume-cigares afin d'utiliser ce dernier en prise de puissance.

Ce type de dispositif de commande présente l'inconvénient, d'être en saillie, en position de repos sur la surface sur laquelle il est monté.

Un autre but de l'invention est de fournir un allume-cigares ne présentant pas cet inconvénient.

Ce but est atteint grâce à un allume-cigares destiné à être monté sur une planche de bord, notamment d'un véhicule automobile, comprenant un corps d'alimentation et un bouton-poussoir amovible chauffant et comportant une surface de poussée, le bouton étant apte à occuper une première position dans le bloc, dans laquelle il est, au moins en partie, saillant par rapport au galbe de la planche de bord, pour pouvoir être saisi et extrait du bloc et une deuxième position dans laquelle le bouton peut être chauffé, caractérisé par le fait que le bouton est, en outre, apte à occuper une troisième position, stable et dans laquelle il n'est pas chauffé et ou la surface de poussée suit le galbe de la planche.

L'allume-cigares selon l'invention comporte en outre une came et un doigt, le doigt parcourant un chemin de came autour de la came, lorsque le doigt et la came sont mus, l'un par rapport à l'autre, en translation; de plus, le chemin de came présente une courbure autour d'un axe de rotation parallèle à l'axe de la translation pour mouvoir, lors de la translation, le doigt et la came en rotation l'un par rapport à l'autre, le doigt et la came étant respectivement constitués d'une bague cylindrique, ces deux bagues étant coaxiales et aptes à un mouvement de rotation, l'une par rapport à l'autre, selon l'axe de rotation.

Avantageusement dans ce cas, l'allume-cigares comprend un bouton de préhension fixé au doigt à l'aide d'une liaison pivot réalisée, grâce à des clips en contre-dépouille. Ceci permet de limiter le nombre de pièces à assembler pour former un bouton conforme à la présente invention.

Avantageusement, le bouton-poussoir 6 de l'allume-cigares est en trois parties qui sont un bouton de préhension 28, un doigt 25 et une came 23.

D'autres aspects, buts et avantages de l'invention apparaîtront à la lecture de la description détaillée qui suit. L'invention sera aussi mieux comprise à l'aide des références aux dessins sur lesquels :
- les figures 1a et 1b sont des représentations schématiques du système doigt-came d'un dispositif de commande de l'art antérieur ; la figure 1a est une vue en coupe selon l'axe longitudinal du doigt, dans un plan parallèle à l'axe de rotation du doigt ; la figure 1b est une vue de dessus du doigt représenté sur la figure 1a ;
- les figures 2a à 2d sont des représentations schématiques d'un bouton d'allume-cigares, de l'art antérieur, selon une coupe parallèle à l'axe de la translation selon lequel le bouton est pressé ; la figure 2a correspond à la position de ce bouton de l'art antérieur lorsqu'il est au repos ; la figure 2b correspond au bouton de la figure 2a lorsqu'il est pressé ; la figure 2c correspond au bouton des figures 2a et 2b, lorsqu'il est en position de chauffe ; la figure 2d correspond au bouton des figures 2a à 2c, lorsque l'utilisateur exerce dessus une traction, pour l'extraire de la planche de bord ;
- la figure 3 est une représentation en perspective de côté, selon une vue éclatée, d'un allume-cigares, conforme à la présente invention ;
- la figure 4 est une représentation en perspective de côté, selon une vue éclatée d'un bouton-poussoir de l'allume-cigares, représenté sur la figure 3 ;
- la figure 5 est une vue en perspective du doigt du bouton-poussoir conforme à l'invention, représenté sur la figure 4 ;
- la figure 6 est une vue en perspective de la came du bouton-poussoir conforme à l'invention, représenté sur la figure 4 ;
- la figure 7 est une représentation schématique du chemin de came, mis à plat, de la came représentée sur la figure 6 ;
- la figure 8 représente schématiquement les variations d'attitude du doigt de bouton-poussoir représenté sur la figure 4, dans le chemin de came représenté sur la figure 7 ;

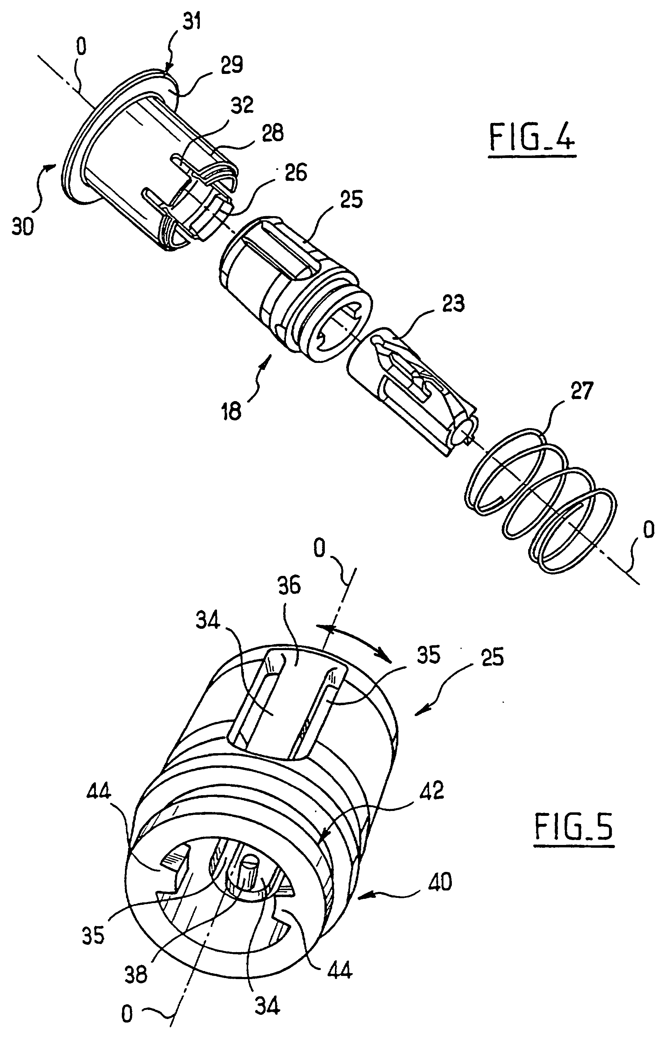

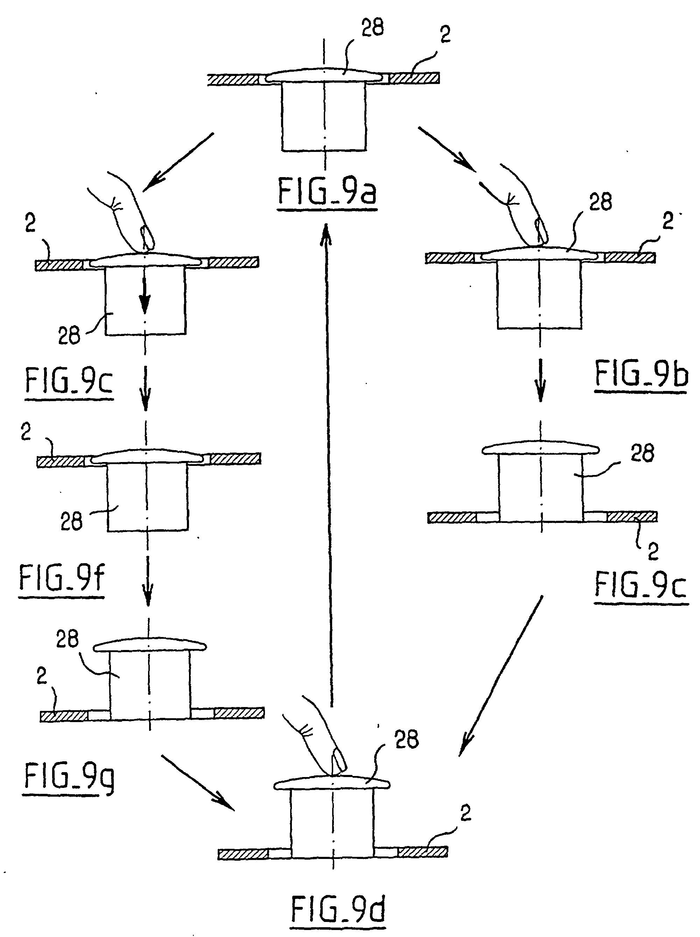

- les figures 9a à 9g sont des représentations schématiques du bouton-poussoir de l'allume-cigares, représenté sur la figure 4, selon une coupe parallèle à l'axe de la translation selon laquelle ce bouton est pressé, la figure 9a correspond à la position de ce bouton lorsqu'il est au repos ; la figure 9b correspond au bouton de la figure 9a, lorsqu'il est légèrement pressé ; la figure 9c correspond au bouton des figures 9a et 9b, lorsqu'il est en position pour être tiré et extrait de la planche de bord sur laquelle est monté l'allume-cigares conforme à l'invention ; la figure 9d correspond au bouton des figures 9a à 9c, lorsqu'il est en position dans laquelle il est pressé pour être ramené en position de repos ; la figure 9e correspond au bouton de la figure 9a, lorsqu'il est pressé à fond ; la figure 9f correspond au bouton des figures 9a à 9e lorsqu'il est en position de chauffe ; la figure 9g correspond au bouton des figures 9a à 9g lorsqu'il ressort de la planche de bord en fin de période de chauffe ;
- les figures 10a, 10b et 10c sont des représentations en coupe du bouton-poussoir représenté sur la figure 4 ; la figure 10a correspond à ce bouton-poussoir dans une première position stable ; la figure 10b correspond à ce bouton-poussoir dans une deuxième position stable ; la figure 10c correspond au bouton-poussoir dans la position de la figure 10b, mais tournée de 90° sur l'axe 0-0 par rapport à cette dernière ;
- la figure 11 est une représentation en perspective selon une vue éclatée d'une variante du bouton-poussoir conforme à la présente invention ; et
- la figure 12 est une représentation en perspective selon une vue partiellement arrachée d'une autre variante du bouton-poussoir conforme à la présente invention.

L'invention est décrite ci-dessous de manière détaillée, dans le cadre d'un exemple particulier mais non limitatif. Selon cet exemple, le dispositif selon l'invention constitue le bouton-poussoir d'un allume-cigares pour véhicules, notamment automobiles.

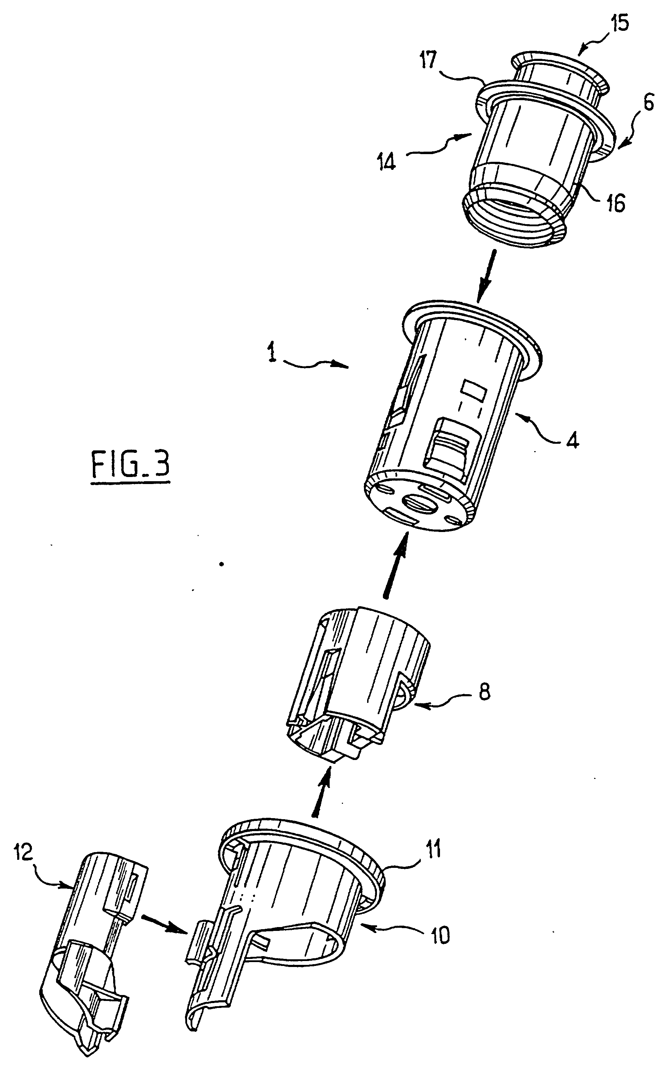

Un mode de réalisation, particulier mais non limitatif, de l'allume-cigares 1 conforme à la présente invention va être décrit de manière détaillée ci-dessous en relation avec les figures 3 à 10.

Il s'agit d'un allume-cigares 1, à encastrer dans une planche de bord 2 d'un véhicule automobile. Il comprend un corps d'alimentation 4, un bouchon chauffant 6, un module de connexion 8, une bague éclairante 10 et un module d'éclairage 12 (figures 3 et 9a à 9g).

Le corps d'alimentation 4 comporte une douille servant de réceptable au bouchon 6 et munie intérieurement d'une prise de courant pour alimenter électriquement une résistance chauffante enroulée en spirale dans le bouchon 6.

Le module de connexion 8 prolonge axialement le corps d'alimentation 4 et est porté sur ce dernier. Le module de connexion 8 alimente électriquement le corps d'alimentation 4, grâce à un faisceau électrique faisant la liaison électrique entre le circuit général du véhicule et le module de connexion 8.

La bague éclairante 10 entoure le corps d'alimentation 4, permet la fixation de ce dernier sur la planche de bord 2 et produit, grâce à une collerette 11, un anneau lumineux sur celle-ci pour le repérage de l'allume-cigares 1, la nuit.

Le module d'éclairage 12 est monté de manière protubérante sur la bague éclairante 10.

On trouvera dans le document FR 2 758 111, une description d'un mode de réalisation des corps d'alimentation 4, module de connexion 8, bague éclairante 10 et module d'éclairage 12 tels que ceux mentionnés ci-dessus.

Le bouchon 6 comporte deux parties mobiles axialement l'une par rapport à l'autre à l'encontre d'un ressort hélicoïdal.

En fait, l'une 14 de ces parties est fixe lorsque le bouchon 6 est en place dans le corps d'alimentation 4 tandis que l'autre 15 est apte à être translatée par rapport à la partie fixe 14. La partie fixe 14 comporte essentiellement un pare-cendre 16 et un anneau 17. L'anneau 17, constitue une protection thermique pour les doigts de l'utilisateur et un élément esthétique. Le pare-cendre 16 entoure un corps de chauffage non représenté et guide l'introduction du bouchon 6 dans le corps d'alimentation 4. Pour une description plus complète de la partie fixe 14, on se référera par exemple au document FR 2 758 111. La partie mobile 15 comporte le corps de chauffage et un bouton-poussoir 18.

Le corps de chauffage comporte une résistance chauffante enroulée en spirale à l'intérieur d'une coupelle.

Comme représenté sur la figure 4, le bouton-poussoir 18 comporte un ressort 27 de type hélicoïdal, une came 23, un doigt 25 et un bouton de préhension 28.

Les came 23, doigt 25 et bouton de préhension 28 sont essentiellement constitués chacun d'un cylindre creux. Le cylindre du doigt 25 s'emboîte sur le cylindre de la came 23. Le cylindre du bouton de préhension 28, s'emboîte sur celui du doigt 25. Ces trois cylindres ont un axe longitudinal 0-0 commun.

Le cylindre du bouton de préhension 28 est obturé par une paroi transversale 29 en forme de disque. Le diamètre de ce disque est supérieur à celui du cylindre du bouton de préhension 28, de manière à former un rebord 31 offrant une prise plus efficace lorsque l'on tire sur le bouton de préhension 28. La face externe de la paroi transversale 29 constitue une surface de poussée 30, sur laquelle l'utilisateur appuie pour actionner le bouton-poussoir 18. Le cylindre du bouton de préhension 28 est muni, du côté de son bord libre, de deux paires de fentes 32 diamétralement opposées pour permettre une déformation élastique du cylindre du bouton de préhension, entre les fentes 32 de chaque paire de fentes. La face interne du cylindre du bouton de préhension 28, entre les deux fentes 32 de chaque paire de fentes, est munie d'un élément en saillie ayant une face biseautée, pour faciliter l'insertion du bouton de préhension 28 sur le doigt 25, et une face principalement perpendiculaire à la face interne du cylindre du bouton de préhension, pour servir d'arrêt axial au doigt 25, empêchant ce dernier de sortir du bouton de préhension 28. Cet élément en saillie et la zone, déformable élastiquement, du cylindre du bouton de préhension 28 forment un clip 26 en contre dépouille. Le bord libre du cylindre du bouton de préhension 28 est muni de deux décrochements formant deux éléments partiellement cylindriques d'axe 0-0 dont le diamètre externe est inférieur au diamètre externe du cylindre du bouton de préhension, le diamètre externe de l'un de ces éléments étant lui-même inférieur à celui de l'autre.

Les décrochements coaxiaux avec le cylindre du bouton de préhension 28, forment une structure en escalier, dont l'une des contremarches formées par des méplats s'étendant radialement par rapport à l'axe 0-0, sert de butée pour le ressort 27, en particulier, lorsque celui-ci est comprimé lors d'une pression sur le bouton de préhension 28. Cette structure en escalier qui sert au montage et au logement du ressort 27, peut avantageusement être remplacée par un chanfrein.

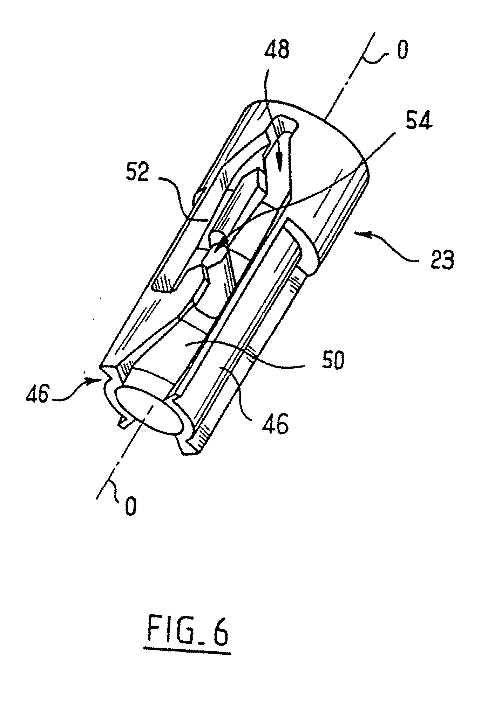

Comme représenté sur la figure 5, le doigt 25 présente une symétrie axiale d'ordre 2. La paroi cylindrique du doigt 25 comporte deux languettes 34. Ces languettes 34 sont formées grâce à des évidements 35 à travers la paroi cylindrique du doigt 25. Ces évidements 35 ont la forme d'un U, dont les branches sont parallèles à l'axe 0-0. Les extrémités libres de ces branches de U partent de la base 36 de chaque languette 34, par laquelle cette dernière est liée à la paroi cylindrique du doigt 25. Cette base 36 est proche de l'un des bords libres de la paroi cylindrique du doigt 25. Chaque languette 34 est venue de matière avec la paroi cylindrique du doigt 25 et s'étend à partir de la base 36 longitudinalement, parallèlement à cette paroi cylindrique, en direction de l'autre bord libre de cette dernière. Cet autre bord libre comporte une structure de retenue 40 du doigt 25 dans le bouton de préhension 28.

Chaque languette 34 a une longueur et une épaisseur selon la direction radiale par rapport à l'axe 0-0, telle que chaque languette 34 est apte à une déformation élastique dans cette direction radiale.

Chaque languette 34, comporte à son extrémité libre, c'est-à-dire à son extrémité longitudinalement opposée à sa base 36, un téton 38. Ce téton 38 est constitué d'un petit élément plein, venu de matière avec chaque languette 34 et s'étendant sur quelques millimètres, à partir de cette dernière vers l'intérieur du cylindre du doigt 25. Ce téton 38 a avantageusement une forme oblongue en coupe transversale, de manière à augmenter la surface de contact avec la came 23 pour limiter la pression de contact et réduire ainsi l'usure des pièces en frottement.

La structure de retenue 40 est principalement constituée d'une gorge 42 circulaire, formée sur la face externe de la paroi cylindrique du doigt 25, centrée sur l'axe 0-0. La structure de retenue 40 et les clips 26 forment une liaison pivot entre le doigt 25 et le bouton de préhension 28.

La face interne du cylindre du doigt 25 est munie de deux nervures de guidage 44 diamétralement opposées. Chaque nervure de guidage 44 s'étend, longitudinalement sous la zone de la paroi cylindrique du doigt 25 où se trouve la structure de retenue 40, et radialement sur une épaisseur de l'ordre du millimètre. Ces moyens de guidage 44 favorisent le guidage du mouvement du doigt 25 sur la came 23.

Comme représenté sur la figure 6, la came 23 est constituée d'un cylindre creux et présente une symétrie axiale d'ordre 2, avec une paire de rainures de guidage 46, et une paire de chemins de came 48, les éléments de chaque paire étant symétriques l'un de l'autre, par rapport à l'axe 0-0.

Chaque rainure de guidage 46 est constituée d'un canal formé dans le cylindre de la came 23. Ce canal s'étend longitudinalement à partir du bord libre du cylindre de la came 23, situé du côté de la structure de retenue 40 et des nervures de guidage 44, lorsque la came 23 est emboîtée dans le doigt 25. Ce canal ne s'étend pas jusqu'à l'autre bord libre du cylindre de la came 23, de manière à ce que, lorsque la came 23, le doigt 25 et le bouton de préhension 28 sont emboîtés les uns dans les autres, la came 23 soit bloquée longitudinalement d'une part, par la paroi transversale 29 et, d'autre part, par les nervures de guidage 44 butant dans le fond des rainures de guidage 46.

Ces rainures de guidage 46 ont une largeur, selon la circonférence externe du cylindre de la came 23, suffisante pour permettre la rotation du doigt 25 et la came 23, l'un par rapport à l'autre, nécessaire au parcours complet des chemins de came 48 par les tétons 38.

Chaque chemin de came 48 est également constitué d'un canal formé dans le cylindre de la came 23. Ce canal a une forme de U dont une branche est plus longue que l'autre. La partie de chaque chemin de came 48 correspondant à la branche la plus longue 50 s'étend longitudinalement à partir du bord libre du cylindre de la came 23, situé du côté de la structure de retenue 40 et des nervures de guidage 44, lorsque la came 23 est emboîtée dans le doigt 25. Ce canal ne s'étend pas jusqu'à l'autre bord libre de la came 23, mais tourne en épingle à cheveux pour former la base du U.

La branche du U la plus courte 52 revient parallèlement, à celle la plus longue. Les deux branches 50, 52 communiquent entre elles par un passage 54 situé avant l'extrémité de la branche la plus courte 52.

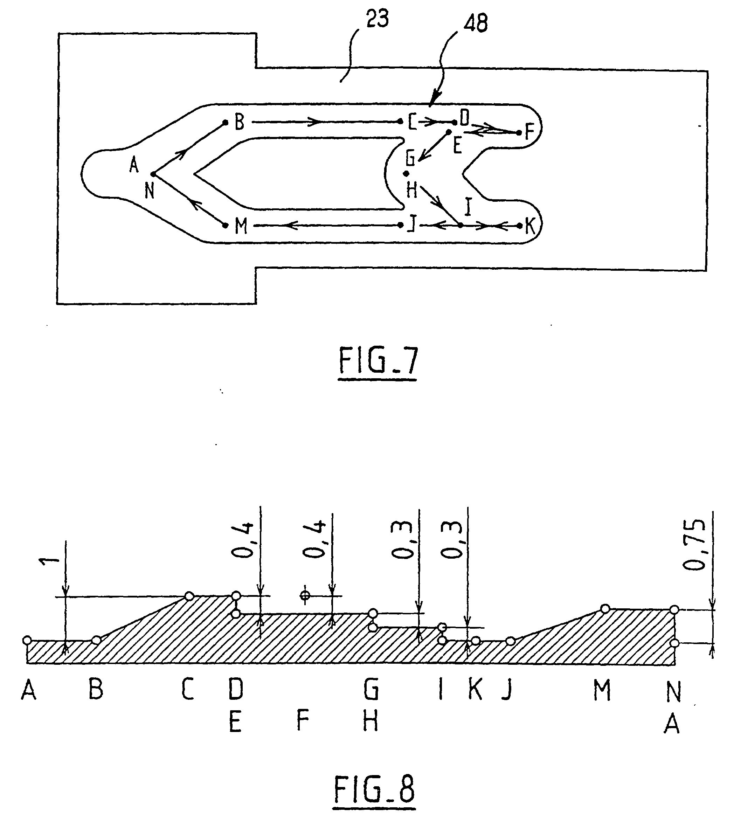

Le canal du chemin de came 48, présente une profondeur variable. La figure 7 représente schématiquement le chemin de came 48, dans un plan. La came 23 est une came-coeur, le chemin de came 48 a une forme de coeur. Les lettres A à N indiquent différentes positions successives d'un téton 38 sur un chemin de came 48.

La figure 8 représente schématiquement le profil des variations d'altitude d'un téton 38, dans un chemin de came 48, en fonction des différentes positions A à N de la figure 7.

Si l'on prend pour échelle 1, l'amplitude maximale de la variation d'altitude le long du chemin de came 48, le point A est à l'altitude 0.

Lorsque l'on appuie sur le bouton de préhension 28, le téton 38 passe de A en B en restant à l'altitude 0. Le téton 38 passe ensuite de B à C, en suivant une rampe, de l'altitude 0 à l'altitude 1, puis de C à D, en restant à l'altitude 1.

Le téton 38 peut parcourir le chemin de came 48, entre A et D de manière réversible. Si la pression sur le bouton de préhension 28, à l'encontre du ressort 27, est relâchée, le téton 38 revient en A, sous l'effet de la force de rappel du ressort 27.

Par contre, si le bouton de préhension 28 est enfoncé davantage dans la planche de bord 2, le téton 38 redescend à l'altitude 0,6, de D à E.

Le passage de D à E s'effectue selon une marche ou une rampe dont la pente est suffisamment forte pour que sur cette portion du chemin de came 48, le déplacement du téton 38 se fasse de manière irréversible. C'est-à-dire, que si la pression est relâchée sur le bouton de préhension 28, le téton 38 ne peut revenir vers B, malgré la force fournie par le ressort 27.

Si le bouton de préhension 28 est relâché, le téton 38 passe de E à G puis à H, selon un chemin unique puisque l'altitude décroît jusqu'à 0,3 en H, et que la pente entre G et H est telle que le téton 38 ne peut revenir en arrière. Par contre, si le bouton de préhension 28 est encore enfoncé dans la planche de bord 2, la came 23 arrive en butée contre la paroi transversale 29, lorsque le téton 38 est en F. Lorsque l'utilisateur relâche la pression, le téton 38 revient en E puis en H, comme décrit précédemment.

En H, la came 23 est en position stable dans le doigt 25 car d'une part, l'altitude en H est plus basse qu'en G et, d'autre part, le passage 54 présente une surface concave apte à retenir le téton 38 lorsqu'il vient de la position E sous l'effet de la force de rappel du ressort 27.

A partir de cette position stable H, si l'utilisateur appuie à nouveau sur le bouton de préhension 28, le téton 38 ne pouvant revenir en arrière de H à G, se déplace vers I qui se trouve à l'altitude 0. Si l'utilisateur continue à enfoncer le bouton de préhension 28, le téton parvient à la position K, où la came 23 arrive en butée contre la paroi transversale 29.

Lorsque l'utilisateur relâche le bouton de préhension 28, le téton 38 revient en I, en J, puis en M, à l'altitude 0,75, sous l'effet de la force de rappel du ressort 27.

La pente entre J et M est suffisamment faible pour que le téton 38 puisse effectuer ce parcours sous le seul effet de la force de rappel du ressort 27. Arrivé en M, le téton 38 revient spontanément en N, puis en A, sous l'effet de la force de rappel du ressort 27, l'altitude entre M et N étant invariante, et celle entre N et A décroissant rapidement jusqu'à 0. En A, le téton 38 ne peut revenir en arrière, vers N, car la pente entre A et N est trop forte.

En position A, les nervures de guidage 44 sont en butée au fond des rainures de guidage 46 et le ressort 27 maintient la came 23 et le doigt 25 ainsi en butée. L'ensemble came 23/doigt 25 est alors dans une autre position stable. Cette situation ne peut être modifiée que si l'utilisateur appuie à nouveau sur le bouton de préhension 28.

Le téton 38 est ainsi prêt pour un nouveau cycle A-N tel que celui décrit ci-dessus.

L'extrémité libre du téton 38, pendant le parcours A-N décrit ci-dessus, est constamment en contact avec le fond du canal du chemin de came 48, grâce à l'élasticité de la languette 34.

Lorsque l'utilisateur presse le bouton de préhension 28, ou lorsque la force de rappel du ressort 27 agit, le téton 38 exerce, sur les parois latérales du canal formant le chemin de came 48, une force qui tend à faire déplacer en rotation, autour de l'axe 0-0, le doigt 25 par rapport à la came 23. C'est le cas notamment de A à B, de E à G, de H à I et de M à N.

Les différentes positions du chemin de came 48, décrites ci-dessus correspondent à différentes positions du bouton de préhension 28 par rapport à la planche de bord 2. Ceci est illustré par les figures 9a à 9g.

La figure 9a correspond à la position stable H. Si l'utilisateur appuie légèrement sur le bouton de préhension 28 (figure 9b), le téton 38 passe de H à I ou K. Lorsque l'utilisateur relâche alors la pression sur le bouton de préhension 28, le téton 38 passe de I ou K à A. Dans cette position, le bouton de préhension 28 est saillant sur la planche de bord 2 (figure 9c). Le bouchon 6 peut alors, par traction sur le bouton de préhension 28, être extrait du corps d'alimentation 4, pour brancher sur le corps d'alimentation 4 un autre objet tel qu'un chargeur pour téléphone mobile, ou allumer un cigare ou une cigarette.

L'utilisateur peut aussi appuyer à nouveau sur le bouton de préhension 28 (figure 9d), le téton 38 passe alors de la position A à D ou F, puis à E lorsque l'utilisateur relâche sa pression pour revenir à la position stable H, dans laquelle le bouton de préhension 28 affleure à la surface de la planche de bord 2 (figure 9a).

Partant de la position stable H (figure 9a), l'utilisateur peut, s'il souhaite allumer une cigarette ou un cigare, opérer différemment. Il appuie sur le bouton de préhension 28 mais, lorsque le téton 38 arrive dans la positon K et que le doigt 25 et la came 23 sont en butée, l'utilisateur continue à enfoncer le bouton de préhension 28 dans la planche de bord 2 (figures 9e). Le bouchon 6 fonctionne alors comme un bouchon d'allume-cigares classique. La coupelle dans laquelle se trouve la résistance chauffante reste maintenue (figure 9f) dans un bilame qui ne libère le bouchon 6 que lorsque la résistance chauffante est à la température souhaitée. Lorsque l'utilisateur relâche sa pression sur le bouchon de préhension 28, le téton revient en position A, dans laquelle le bouchon de préhension 28 affleure par exemple à la surface de la planche de bord 2 ; alors que la coupelle reste coincée dans le bilame.

Enfin, lorsque la résistance chauffante est à la température souhaitée, la coupelle remonte et le bouchon de préhension 28, qui était retenu à la coupelle par un tenon 56, remonte au dessus de la surface de la planche de bord 2, pour que l'utilisateur puisse extraire le bouchon 6 du corps d'alimentation 4 (figure 9g). Lorsque l'utilisateur remet le bouchon 6 en place dans le corps d'alimentation 4, il lui suffit de réappuyer sur le bouton de préhension 28 (figure 9d). Le téton 38 parcourt le chemin A à F. Le doigt 25 et la came 23 étant en butée, l'utilisateur peut remettre le bouchon 6 dans le corps d'alimentation 4. Lorsque l'utilisateur relache sa pression, le téton 38 revient en H, et le bouton de préhension 28 vient affleurer à la surface de la planche de bord 2 (figure 9a).

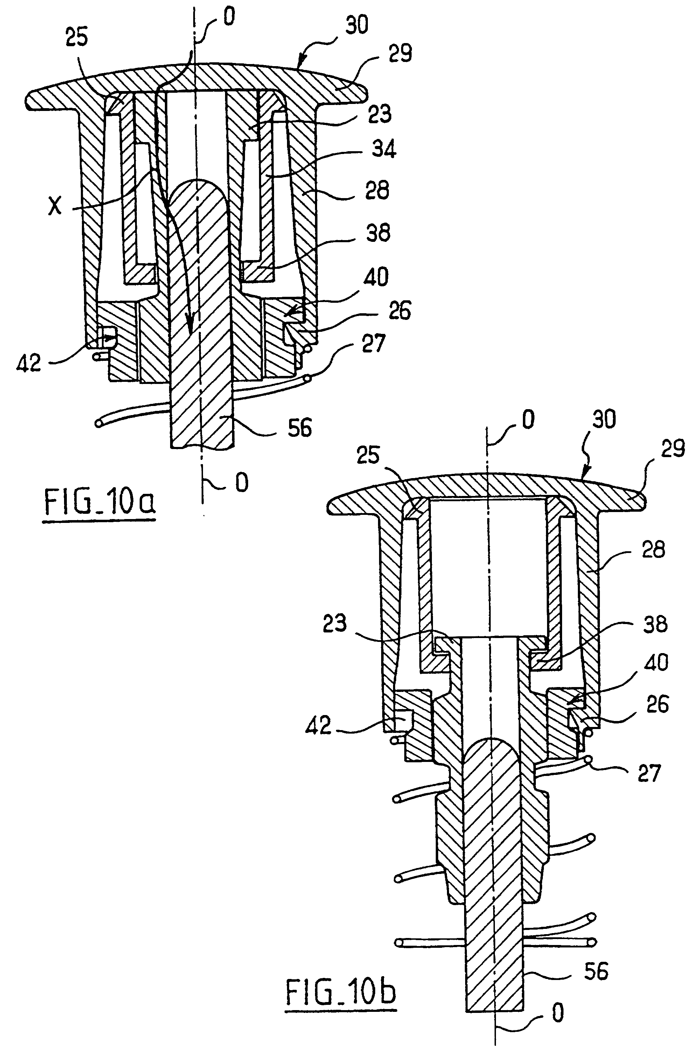

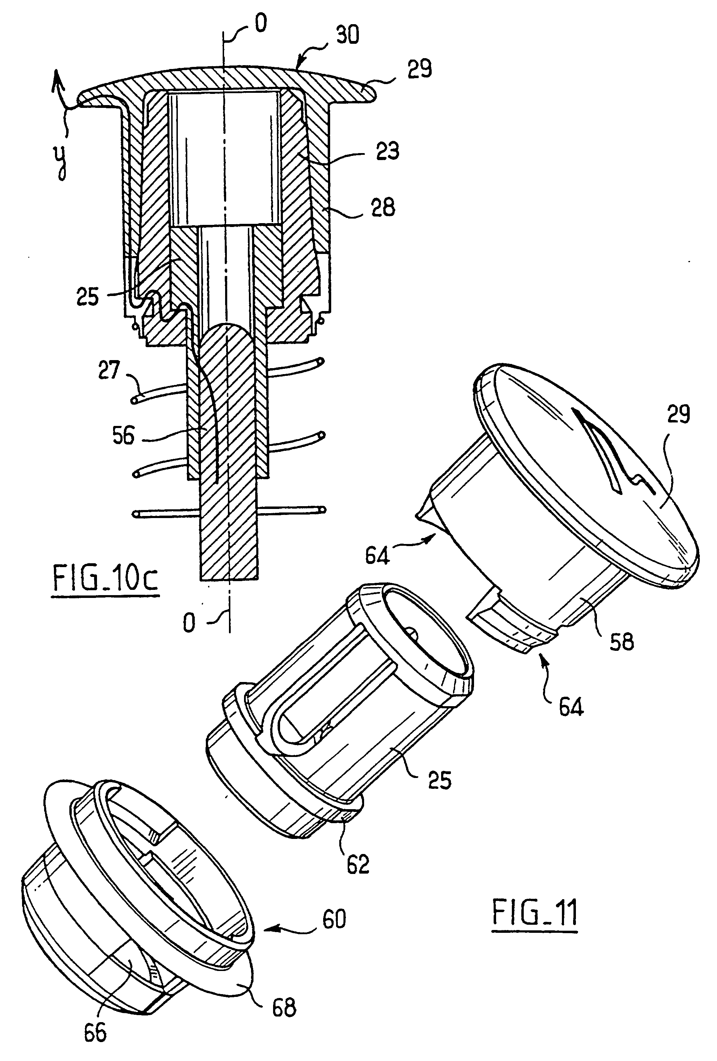

Les figures 10a, 10b et 10c illustrent schématiquement les positions respectives du doigt 25 et de la came 23 lorsque le téton est dans les positions A et H. On peut y voir clairement que la came 23 est en butée contre la paroi transversale 29, sur la figure 10a. Les plans de coupe des figures 10a et 10b sont tournés de 90° l'un par rapport à l'autre. On voit donc que le doigt 25 est maintenu dans le bouchon de préhension 28, mais qu'il a tourné autour de l'axe 0-0 entre les positions correspondant respectivement aux figures 10a et 10b. Le plan de coupe correspondant à la figure 10c est tourné de 90° autour de l'axe 0-0, par rapport à celui de la figure 10b.

Donc, comme décrit précédemment, le chemin de came 48 est limité longitudinalement par deux butées. L'une de ces butées correspondant au contact de la came 23 avec la paroi transversale 29 (figure 10a) et l'autre correspondant au contact des nervures de guidage 44 au fond des rainures de guidage 46 (figure 10c). Ces butées sont telles que dans les positions correspondantes, ce n'est pas le téton 38 lui-même qui limite les déplacements relatifs du doigt 25 par rapport à la came 23. Ainsi, lorsque l'utilisateur presse le bouton de préhension 28, lorsqu'il extrait le bouchon ou corps de chauffe 4 ou lorsque la force de rappel du ressort 27 agit, il ne s'exerce pas sur le téton 38, de contraintes dirigées parallèlement à l'axe longitudinal 0-0.

Les flèches X (figure 10a) et Y (figure 10c) indiquent respectivement les chemins de transmission des efforts lorsque l'utilisateur presse sur le bouton de préhension 28 ou l'extrait de la planche de bord 2. Ces flèches X et Y passent par les butées indiquées ci-dessus.

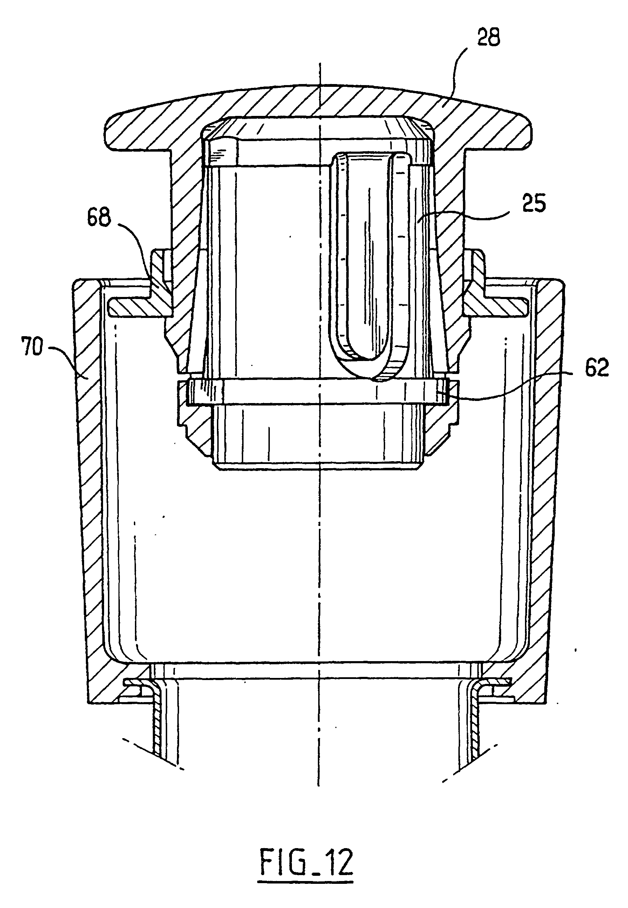

On a décrit ci-dessus de manière détaillée, un mode de réalisation d'un dispositif de commande à plusieurs positions stables, utilisé dans un allume-cigares. Mais, on peut concevoir de nombreuses variantes à ce mode de réalisation . Les figures 11 et 12 illustrent, à titre d'exemple une autre variante de ce mode de réalisation.

Ainsi selon cette variante, au lieu que, comme cela a été décrit ci-dessus, le bouton de préhension 28 soit doté de clips 26 en contre dépouille, servant d'arrêt axial au doigt 25, le bouton de préhension 28 peut être réalisé en deux pièces : un capuchon 58 et une bague 60.

Dans ce cas, la structure de retenue 40 et sa gorge 42 sont remplacées par un anneau 62 en saillie sur la surface externe du cylindre de doigt 25.

Le capuchon 58 est formé d'un cylindre bouché à une extrémité par une paroi transversale 29 analogue a celle déjà décrite. Le capuchon 58 comporte deux crampons 64 dirigés de manière saillante sur la surface externe du cylindre.

La bague 60 du capuchon 58 est formée d'un cylindre dont la paroi est munie de deux ouvertures 66. Les crampons 64 et les ouvertures 66 coopèrent pour former un moyen d'assemblage de type clip. L'une des extrémités ouvertes de la bague 60 est rétrécie, de manière à retenir le doigt 25 au niveau de l'anneau 62. Ainsi, le capuchon 58 et la bague 60 forment une cage dans laquelle le doigt 25 est maintenu prisonnier lorsque les crampons 64 sont en prise avec les ouvertures 66.

De nombreux autres moyens, tels qu'un vissage, un collage, une soudure par ultrason, etc. peuvent être envisagés pour assembler le capuchon 58 et la bague 60.

Une collerette 68, en matière plastique, est placée autour du bouchon de préhension 28. Cette collerette 68 est destinée à encaisser les efforts radiaux que l'utilisateur est susceptible d'imposer lorsque le bouton de préhension 28 vient en butée contre un guide 70 extérieur, cylindrique, du bouchon chauffant 6.

Le guide 70 est dans une matière plastique transparente ou translucide pour servir de guide lumineux.

Selon encore d'autres variantes, le nombre de chemins de cames 48 et de tétons 38 peut être différent de deux.

## Revendications

1. Dispositif de commande à plusieurs positions stables (A,H), comprenant une came (23) et un doigt (25), le doigt (25) parcourant un chemin de came autour de la came (23), lorsque le doigt (25) et la came (23) sont mus, l'un par rapport à l'autre, en translation, le chemin de came présentant une courbure autour d'un axe de rotation (0-0) parallèle à l'axe de la translation pour mouvoir, lors de la translation, le doigt (25) et la came (23) en rotation l'un par rapport à l'autre, **caractérisé par le fait que** le doigt (25) et la came (23) sont respectivement constitués d'une bague cylindrique, ces deux bagues étant coaxiales et aptes à un mouvement de rotation l'une par rapport à l'autre, selon l'axe de rotation (0-0), le doigt (25) étant guidé dans le chemin de came grâce à un téton (38) monté sur une languette (34) élastique venue de matière avec la bague sur lequel elle est située.

2. Dispositif de commande selon la revendication précédente, **caractérisé par le fait qu'**il comprend au moins une butée pour encaisser des efforts importants exercés sur le dispositif, selon l'axe de translation.

3. Dispositif selon l'une des revendications précédentes, **caractérisé par le fait qu'**il comporte un ressort (27) assurant un effort permanent pour ramener le doigt en butée sur la came coeur, dans les positions stables.

4. Allume-cigares destiné à être monté sur une planche de bord (2), notamment d'un véhicule automobile, comprenant un corps d'alimentation (4) et un bouton-poussoir (6) amovible chauffant et comportant une surface de poussée (30), le bouton étant apte à occuper une première position dans le bloc, dans laquelle il est, au moins en partie, saillant par rapport au galbe de la planche de bord (2), pour pouvoir être saisi et extrait du bloc (4) et une deuxième position dans laquelle le bouton (6) peut être chauffé, **caractérisé par le fait que** le bouton (6) est, en outre, apte à occuper une troisième position stable et dans laquelle il n'est pas chauffé et où la surface de poussée suit le galbe de la planche (2), l'allume-cigares comprenant une came (23) et un doigt (25), le doigt (25) parcourant un chemin de came autour de la came (23), lorsque le doigt (25) et la came (23) sont mus, l'un par rapport à l'autre, en translation, et que le chemin de came présente une courbure autour d'un axe de rotation (0-0) parallèle à l'axe de la translation pour mouvoir, lors de la translation, le doigt (25) et la came (23) en rotation l'un par rapport à l'autre, le doigt (25) et la came (23) étant respectivement constitués d'une bague cylindrique, ces deux bagues étant coaxiales et aptes à un mouvement de rotation l'une par rapport à l'autre, selon l'axe de rotation (0-0).

5. Allume-cigares selon la revendication 4, **caractérisé par le fait que** le bouton-pressoir (6) est en trois parties qui sont un bouton de préhension (28), un doigt (25) et une came (23).

6. Allume-cigares selon l'une des revendications 4 et 5, **caractérisé par le fait que** le doigt (25) est guidé dans le chemin de came grâce à un téton (38) monté sur une languette (34) élastique venue de matière avec la bague sur lequel elle est située.

7. Allume-cigares selon l'une des revendications 4 à 6, **caractérisé par le fait qu'**il comprend au moins une butée pour encaisser des efforts importants exercés sur le dispositif, selon l'axe de translation.

8. Allume-cigares selon l'une des revendications 4 à 7, **caractérisé par le fait qu'**il comporte un ressort (27) assurant un effort permanent pour ramener le doigt en butée sur la came coeur, dans les positions stables.

9. Allume-cigares selon l'une des revendications 5 à 8, **caractérisé par le fait que** le bouton de préhension (28) est fixé au doigt (25) à l'aide d'une liaison pivot réalisée grâce à des clips (26) en contre-dépouille.

10. Allume-cigares selon l'une des revendications 5 à 8, **caractérisé par le fait que** le doigt (25) est maintenu prisonnier dans une cage formée d'une bague (60) et d'un capuchon (58).

11. Allume-cigares selon l'une des revendications 5 à 10, **caractérisé par le fait qu'**il comprend une collerette (60) pour encaisser les efforts radiaux que l'utilisateur est susceptible d'imposer lorsque le bouton de préhension (28) vient en butée contre un guide (70) extérieur, cylindrique, du bouchon chauffant (6).

## Claims

1. A control device with a plurality of stable positions (A, H), comprising a cam (23) and a finger (25), the finger (25) being movable over a cam track around the cam (23) when the finger (25) and the cam (23) are moved in translation with respect to each other, the cam track having a curvature about an axis of rotation (0-0) parallel to the axis of the translational movement, for moving the finger (25) and cam (23) in rotation with respect to each other during the translational movement, **characterised by** the fact that the finger (25) and the cam (23) consist of respective cylindrical sleeves, the two said sleeves being coaxial and adapted to perform rotational movement with respect to each other with respect to the axis of rotation (0-0), the finger (25) being guided in the cam track by a peg (38) mounted on an elastic tongue (34), which is formed integrally with the sleeve on which it is situated.

2. A control device according to the preceding Claim, **characterised by** the fact that it includes at least one abutment element for absorbing the high forces exerted on the device, along the axis of the translational movement.

3. A device according to one of the foregoing Claims, **characterised by** the fact that it includes a spring (27) exerting a permanent force for urging the finger into abutment on the heart cam, in the stable positions.

4. A cigar lighter adapted to be mounted on a fascia panel (2), especially for a motor vehicle, and comprising a power supply body (4) and a removable, push-in, heating plug (6) having a push surface (30), the plug being adapted to occupy a first position in the body in which it projects at least partly with respect to the contour of the fascia panel (2), whereby it can be gripped and removed out of the body (4), and a second position in which the plug (6) can be heated, **characterised by** the fact that the plug (6) is further adapted to occupy a stable third position in which it is unheated, and in which the push surface follows the contour of the fascia panel (2), the cigar lighter comprising a cam (23) and a finger (25), the finger (25) being movable over a cam track around the cam (23) when the finger (25) and the cam (23) are moved in translation with respect to each other, and in that the cam track has a curvature about an axis of rotation (0-0) parallel to the axis of the translational movement, for moving the finger (25) and cam (23) in rotation with respect to each other during the translational movement, the finger (25) and the cam (23) consisting of respective cylindrical sleeves, the two said sleeves being coaxial and adapted to perform rotational movement with respect to each other with respect to the axis of rotation (0-0).

5. A cigar lighter according to Claim 4, **characterised by** the fact that the push-in plug (6) is in three parts, which are a gripping knob (28), a finger (25) and a cam (23).

6. A cigar lighter according to Claim 4 or Claim 5, **characterised by** the fact that the finger (25) is guided in the cam track by a peg (38) mounted on an elastic tongue (34) which is formed integrally with the sleeve on which it is situated.

7. A cigar lighter according to one of Claims 4 to 6, **characterised by** the fact that it includes at least one abutment element for absorbing the high forces exerted on the device, along the axis of the translational movement.

8. A cigar lighter according to one of Claims 4 to 7, **characterised by** the fact that it includes a spring (27) exerting a permanent force for urging the finger into abutment on the heart cam, in the stable positions.

9. A cigar lighter according to one of Claims 5 to 8, **characterised by** the fact that the gripping button (28) is fixed to the finger (25) by means of a pivot connection comprising opposed gripping clips (26).

10. A cigar lighter according to one of Claims 5 to 8, **characterised by** the fact that the finger (25) is held trapped in a cage defined by a sleeve member (60) and a cap member (58).

11. A cigar lighter according to one of Claims 5 to 10, **characterised by** the fact that it includes a collar element (60) for absorbing the radial forces which the user is liable to apply when the gripping button (28) comes into engagement against an external cylindrical guide portion (70) of the heating plug (6).

## Patentansprüche

1. Betätigungsvorrichtung mit mehreren stabilen Positionen (A, H), mit einem Nocken (23) und einem Finger (25), wobei der Finger (25) um den Nocken (23) eine Nockenbahn durchläuft, wenn der Finger (25) und der Nocken (23) in Bezug aufeinander translatorisch betätigt werden, wobei die Nockenbahn eine Biegung um eine zur Translationsachse parallele Drehachse (0-0) aufweist, um bei der Translationsbewegung den Finger (25) und den Nocken (23) bezüglich einander in Drehung zu versetzen,
**dadurch gekennzeichnet, dass** der Finger (25) und der Nocken (23) jeweils von einem zylindrischen Ring gebildet sind, wobei diese beiden Ringe koaxial sind und in Bezug aufeinander eine Drehbewegung entlang der Drehachse (0-0) auszuführen vermögen, wobei der Finger (25) in der Nockenbahn mittels eines Zapfens (38) geführt ist, der auf einer elastischen Lasche (34) angebracht ist, die einstückig mit dem Ring ausgebildet ist, auf dem sie angeordnet ist.

2. Betätigungsvorrichtung nach dem vorhergehenden Anspruch,
**dadurch gekennzeichnet, dass** sie wenigstens einen Anschlag umfasst, um großen Kräften, die auf die Vorrichtung entlang der Translationsachse einwirken, standzuhalten.

3. Vorrichtung nach einem der vorhergehenden Ansprüche,
**dadurch gekennzeichnet, dass** sie eine Feder (27) aufweist, die eine ständige Spannung gewährleistet, um in den stabilen Positionen den Finger in Anlage am Nockenherz zu bringen.

4. Zigarettenanzünder, der dazu bestimmt ist, in einem Armaturenbrett (2), insbesondere eines Kraftfahrzeugs, angebracht zu werden, mit einem Stromversorgungsgehäuse (4) und einem abnehmbaren, aufheizbaren Druckknopf (6) mit einer Druckfläche (30), wobei der Druckknopf in dem Block eine erste Position einzunehmen vermag, in der er in Bezug auf die Wölbung des Armaturenbretts (2) wenigstens zum Teil vorsteht, um ergriffen und aus dem Block (4) herausgezogen werden zu können, sowie eine zweite Position, in der der Druckknopf (6) aufgeheizt werden kann,
**dadurch gekennzeichnet, dass** der Druckknopf (6) ferner eine dritte stabile Position einzunehmen vermag, in der er nicht aufgeheizt wird und in der die Druckfläche der Wölbung des Armaturenbretts (2) folgt, wobei der Zigarettenanzünder einen Nocken (23) und einen Finger (25) aufweist, wobei der Finger (25) um den Nocken (23) eine Nockenbahn durchläuft, wenn der Finger (25) und der Nocken (23) bezüglich einander translatorisch betätigt werden, und dass die Nockenbahn eine Biegung um eine zur Translationsachse parallele Drehachse (0-0) aufweist, um bei der Translationsbewegung den Finger (25) und den Nocken (23) bezüglich einander in Drehung zu versetzen, wobei der Finger (25) und der Nocken (23) jeweils von einem zylindrischen Ring gebildet sind, wobei diese beiden Ringe koaxial sind und in Bezug aufeinander eine Drehbewegung entlang der Drehachse (0-0) auszuführen vermögen.

5. Zigarettenanzünder nach Anspruch 4,
**dadurch gekennzeichnet, dass** der Druckknopf (6) aus drei Teilen besteht, nämlich einem Griffknopf (28), einem Finger (25) und einem Nocken (23).

6. Zigarettenanzünder nach einem der Ansprüche 4 oder 5,
**dadurch gekennzeichnet, dass** der Finger (25) in der Nockenbahn mittels eines Zapfens (38) geführt wird, der auf einer elastischen Lasche (34) angebracht ist, die einstückig mit dem Ring gefertigt ist, auf dem sie angeordnet ist.

7. Zigarettenanzünder nach einem der Ansprüche 4 bis 6,
**dadurch gekennzeichnet, dass** er wenigstens einen Anschlag umfasst, um großen Kräften, die auf die Vorrichtung entlang der Translationsachse einwirken, standzuhalten.

8. Zigarettenanzünder nach einem der Ansprüche 4 bis 7,
**dadurch gekennzeichnet, dass** er eine Feder (27) aufweist, die eine ständige Spannung gewährleistet, um in den stabilen Positionen den Finger in Anlage am Nockenherz zu bringen.

9. Zigarettenanzünder nach einem der Ansprüche 5 bis 8,
**dadurch gekennzeichnet, dass** der Griffknopf (28) auf dem Finger (25) mit Hilfe einer Gelenkverbindung befestigt ist, die mittels hinterschnittenen Clips ausgeführt ist.

10. Zigarettenanzünder nach einem der Ansprüche 5 bis 8,
**dadurch gekennzeichnet, dass** der Finger (25) in einem Gehäuse gefangen ist, das von einem Ring (60) und einer Abdeckkappe (58) gebildet ist.

11. Zigarettenanzünder nach einem der Ansprüche 5 bis 10,
**dadurch gekennzeichnet, dass** er einen Kragen (60) aufweist, um den radialen Kräften, die durch den Benutzer ausgeübt werden können, standzuhalten, wenn der Griffknopf (28) gegen eine äußere zylindrische Führung (70) des aufheizbaren Steckteils (6) zum Anschlag kommt.
